# EUROPEAN PATENT SPECIFICATION

(11) **EP 2 029 277 B1**
(45) Date of publication and mention of the grant of the patent: **22.09.2010**
(21) Application number: 07729982.4
(22) Date of filing: 07.06.2007
(51) Int. Cl.: B01J 27/135, B01J 27/138, C08F 4/642, C08F 10/00

(54) **CATALYST COMPONENT FOR THE POLYMERIZATION OF OLEFINS**
KATALYSATORKOMPONENTE FÜR DIE OLEFINPOLYMERISATION
COMPOSANT DE CATALYSEUR POUR LA POLYMÉRISATION D'OLÉFINES

(30) Priority: 22.06.2006 EP 06115884; 29.06.2006 US 817547 P
(43) Date of publication of application: 04.03.2009
(73) Proprietor: Basell Poliolefine Italia S.r.l., 20124 Milano (IT)
(72) Inventor: COLLINA, Gianni, I-44044 Ferrara (IT); DI DIEGO, Maria, I-40138 Bologna (IT); FUSCO, Ofelia, I-44100 Ferrara (IT); MORINI, Giampiero, I-35100 Padova (IT); VINCENZI, Paolo, I-45036 Ficarolo (IT)
(74) Representative: Giberti, Stefano
(86) International application number: PCT/EP2007/055618
(87) International publication number: WO 2007/147740

(56) References cited:
- WO-A-02/44219
- WO-A-2005/103094

## Description

The present invention relates to a process for the preparation of a catalyst component for the polymerization of olefins comprising magnesium, titanium and an electron donor.

The modem ZN catalysts including titanium compounds supported on magnesium halides are well known in the art. Catalysts of this type are described in the U.S. patent No.4,298,718. Said catalysts comprise titanium tetrahalides supported on halides of magnesium by co-grinding of the chemicals. Although the catalysts have high activity in the polymerization of alpha olefins like propylene, they are not very stereospecific. Improvements to stereospecificity have been obtained by adding certain electron-donor compounds to the solid catalyst component and an electron-donor (external) added either to the aluminum alkyl co-catalyst component or the polymerization reactor.

The catalysts modified in this manner, although being highly stereospecific (the obtained polymer is about 94-95% insoluble in xylene), still did not show sufficiently high levels of activity. Significant improvements in both activity and stereospecificity were obtained by preparing the solid catalytic component according to the technique described in U.S. patent No.4,226,741. High level performances in catalyst activity as well as stereospecificity have been obtained with the catalysts described in the European patent No.045977. Said catalysts comprise as a solid catalysts component, a magnesium halide on which is supported a titanium halide, preferably TiCl₄, and an electron-donor compound, selected from specific classes of carboxylic acid esters, and, as co-catalyst, a system formed of an Al-trialkyl compound and a silicon compound containing at least one Si-OR bond (R hydrocarbon radical).

Nevertheless, research activities have been running with the purpose of modifying and/or improving the performance of the mentioned catalysts.

When the catalyst is obtained starting from precursors comprising adducts of formula MgCl₂(ROH)ₙ, where R is a C1-C10 alkyl group preferably, ethyl, and n is from 2 to 6, it can show both improved activity and morphological properties. However, at the time of reacting a precursor of this type with the titanium compound, usually TiCl₄ at high temperature, a large amount of by-products is produced. These latter, which can also interact with the electron donor which is typically simultaneously added to the system, may be the cause of a decrease of the catalyst performances in terms of activity/stereospecificity balance and morphological properties. WO02/48208 discloses a process for the preparation of catalysts components comprising reacting an adduct of formula MgCl₂(ROH)ₙ according to the meanings given above with a halogenated titanium compound which is continuously fed and removed from the reaction system. The document strongly advises to use very high solid concentrations and, as reported in the working experiments, when the concentration is lowered the results in terms of activity and isotactic index seem to worsen.

The applicant has now found that an improved catalyst component for the polymerization of olefins comprising Mg, Ti, halogen and an electron donor is obtained by a batch process comprising:
(A) A first step comprising reacting an adduct of formula MgCl₂(ROH)ₙ, where R is a C1-C10 alkyl group, and n is from 0.5 to 6, in a liquid medium comprising a titanium compound having at least a Ti-Cl bond at a temperature ranging from 0°C to 80°C and then removing the liquid medium;
(B) A subsequent step comprising reacting the solid product obtained in (A) in a liquid medium comprising an electron donor ED selected from ethers, esters, ketones, silanes, amines, nitriles and amides, and a titanium compound having at least a Ti-Cl bond at a temperature higher than 80°C and then, after removing the liquid medium;
(C) A subsequent step comprising reacting the solid product coming from (B) with a liquid medium comprising a titanium compound having at least a Ti-Cl bond at a temperature higher than 80°C.

The so obtained catalyst component is able to offer good balance of catalyst performances in terms of activity/stereospecificity and in particularly good morphological properties in gas-phase polymerization.

The titanium compound used in step (A), (B) and (C) of the present invention is preferably chosen among those of formula Ti(OR)ₙCl₄₋ₙ in which n is comprised between 0 and 3 and R is an alkyl radical having 1-10 carbon atoms or a COR group. Among them, particularly preferred are titanium compounds in which n is from 0 to 2 and particularly TiCl₄, Ti(OBu)Cl₃, Ti(OBu)₂Cl₂. Titanium tetrachloride being the most preferred.

Preferably, in the adduct MgCl₂(ROH)ₙ, where R is a C1-C10 alkyl group, n is from 1 to 5, preferably from 1.5 to 4.5 and more preferably from 2 to 4. R is preferably selected from linear alkyl groups having from 1 to 5 carbon atoms such as methyl, ethyl, propyl, butyl and pentyl, with ethyl being the most preferred. Preferably said adducts are characterized by a particular X-ray diffraction spectrum, in which, in the range of 29 diffraction angles between 5° and 15°, the three main diffraction lines are present at diffraction angles 2θ of 8.8 ± 0.2°, 9.4 ± 0.2° and 9.8 ± 0.2°, the most intense diffraction lines being the one at 2θ=8.8 ± 0.2°, the intensity of the other two diffraction lines being at least 0.2 times the intensity of the most intense diffraction line. These adducts of the present invention can be prepared according to several methods. In particular the general methods described in WO98/44009 are suitable. According to one of these methods, the adduct is prepared by contacting MgCl₂ and alcohol in the absence of the inert liquid dispersant, heating the system at the melting temperature of MgCl₂-alcohol adduct or above, and maintaining said conditions so as to obtain a completely molten adduct. Said molten adduct is then emulsified in a liquid medium which is immiscible with and chemically inert to it and finally quenched by contacting the adduct with an inert cooling liquid thereby obtaining the solidification of the adduct. In particular, the adduct is preferably kept at a temperature equal to or higher than its melting temperature, under stirring conditions, for a time period equal to or greater than 10 hours, preferably from 10 to 150 hours, more preferably from 20 to 100 hours. Alternatively, in order to obtain the solidification of the adduct, a spray-cooling process of the molten adduct can be carried out.

The step (A) of the present invention can be carried out with or without a substantial presence of any electron donor compound (ED) selected from the groups of ether and esters. In particular, when the ED is an ester it would be preferred to add in this step at least an aliquot of the total amount of ED donor added during the process. Such an aliquot preferably ranges from 20 to 60% of the total amount of donor added in the step A and B and preferably from 40 to 60% of said total amount of donor.

As mentioned, the step (A) is carried out in a liquid medium. Usually the titanium compound mentioned above, which is preferably TiCl₄, is used in large excess. When the titanium compound is, like TiCl₄, liquid at the reaction temperatures ranging from 0°C to 80°C, it can already constitute the liquid medium of the reaction even if additional liquid diluents may be added. The liquid diluent can be any liquid chosen among those inert with the reactants and preferably belonging to liquid aliphatic or aromatic hydrocarbons optionally halogenated such as hexane, heptane, decane, benzene, toluene, chloroform, dichloromethane etc. Among them, aromatic hydrocarbons, optionally halogenated, like benzene, toluene and chlorobenzene are preferred. Whatever the liquid medium is, it is preferred to keep the concentration of the adduct in the medium at a level below 100 g/l, preferably below 90 g/l, and most preferably in the range of from 30 to 80 g/l. The reaction temperature in step (A) ranges from 0 to 80°C, preferably from 10 to 70°C, and more preferably from 20 to 60°C. According to the present invention the reaction temperature is defined as the maximum temperature reached in a given reaction step.

The reaction time of step (A) is not particularly critical, it may range from 1 minute to 10 hours but more preferably from 10 minutes to 5 hours and still more preferably from 10 minutes to 3 hours.

The reaction in step (A) is preferably carried out by suspending the adduct in cold TiCl₄ (generally 0°C); then the so obtained mixture is heated up to about 30-80°C and kept at this temperature for 0.5-1 hours. After that, the excess of TiCl₄ is removed and the solid component is subject to the next step. Optionally, after removal of the liquid medium, which includes the titanium compound; the solid catalyst component may be recovered and washed before being subject to reaction step (B). The same possibility is available at the end of step (B), before beginning step (C).

The step (B) is carried out by a similar methodology with respect to step (A). The solid coming from (A) is reacted preferably with a titanium compound chosen among those of formula Ti(OR)ₙCl₄₋ₙ as defined above, which is preferably TiCl₄.

The reaction is carried out in the presence of an electron donor (ED) which can be added before, simultaneously or after the addition of the titanium compound. Preferably, it is added after the addition of the titanium compound.

Said electron donor compound can be selected from esters, ethers, amines, silicon compounds and ketones. As a result of this contact the electron donor compound remains deposited on the catalyst component. In particular, the alkyl and aryl esters of mono or poly aromatic or aliphatic carboxylic acids such as for example esters of benzoic, phthalic, malonic and succinic acid are preferred. Preferred esters of aromatic carboxylic acids are selected from C₁-C₂₀ alkyl or aryl esters of benzoic and phthalic acids, possibly substituted. The alkyl esters of the said acids being preferred. Particularly preferred are the C₁-C₆ linear or branched alkyl esters. Specific examples are ethylbenzoate, n-butylbenzoate, p-methoxy ethylbenzoate, p-ethoxy ethylbenzoate, isobutylbenzoate, ethyl p-toluate, diethyl phthalate, di-n-propyl phthalate, din-butyl phthalate, di-n-pentyl phthalate, di-i-pentyl phthalate, bis(2-ethylhexyl) phthalate, ethyl-isobutyl phthalate, ethyl-n-butyl phthalate, di-n-hexyl phthalate, di-isobutylphthalate. Among esters of aliphatic acids the succinates are preferred and particularly the substituted succinates disclosed in WO00/63261. Specifically, those described in formula (I) of said patent application and more specifically diethyl 2,2-diisopropylsuccinate, diethyl 2,2-dicyclohexyl-succinate are particularly preferred.

The electron donor compound used in this stage is generally present in amounts such as to give Mg/donor molar ratios of from 1 to 15 particularly from 2 to 10.

The reaction temperature is higher than 80°C and preferably in the range 90-130°C, more preferably from 90 to 120°C. The reaction time ranges from 10 minutes to 5 hours and more preferably from 10 minutes to 3 hours.

In a specific and preferred operative way, step (B) can be performed by first introducing TiCl₄ at 0°C, then when a temperature of 30-50°C is reached, under stirring, the solid coming from (A) is introduced together with an amount of internal donor so as to give a Mg/donor molar ratio of 1-20 and preferably 4-18. The whole is then heated to 90-110°C and these conditions were maintained over at least 30 minutes. After that, the stirring is stopped and the liquid phase was separated (either by sedimentation and siphoning or by filtration) from the solid maintaining the temperature at 100°C.

The solid (optionally isolated from the reactor) is then subject to step (C) of the process. However, it is possible and in certain cases advisable, particularly when a larger amount of donor fixed on the catalyst is needed, to repeat step (B) under the same conditions described above.

The step (C) is carried out basically under the same conditions described for the step (B) with the main difference being in the fact that the electron donor (ED) is not present. The reaction temperature may be higher than that used in step (B) but in any case comprised in the range 90-140°C.

After the step (C) is completed the solid catalyst component is washed with liquid hydrocarbons according to the known techniques.

The catalyst components of the invention form catalysts for the polymerization of alpha-olefms CH₂=CHR, wherein R is hydrogen or a hydrocarbon radical having 1-12 carbon atoms, by reaction or contact with organo-Al compounds in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkylaluminum compounds.

The Al/Ti ratio is higher than 1 and is generally comprised between 20 and 800.

In the case of the stereoregular polymerization of α-olefins, such as for example propylene and 1-butene, an electron donor compound (external donor) which can be the same or different from the compound used as internal donor can be used in the preparation of the catalysts disclosed above. In case the internal donor is an ester of a polycarboxylic acid, in particular a phthalate, the external donor is preferably selected from the silicon compounds containing at least a Si-OR link, having the formula Ra¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl. Examples of such preferred silicon compounds are methylcyclohexyldimethoxysilane, di-isopropyldimethoxysilane, diphenyldimethoxysilane, methyl-t-butyldimethoxysilane, and dicyclopentyldimethoxysilane. Moreover, are also preferred the silicon compounds in which a is 0, c is 3, R² is a branched alkyl or cycloalkyl group and R³ is methyl. Examples of such preferred silicon compounds are cyclohexyltrimethoxysilane, t-butyltrimethoxysilane and thexyltrimethoxysilane.

As previously indicated, the components of the invention and catalysts obtained therefrom find applications in the processes for the (co)polymerization of olefins of formula CH₂=CHR in which R is hydrogen or a hydrocarbon radical having 1-12 carbon atoms. It has been found that the catalysts formed by the catalyst components prepared according to the process of the invention display, particularly in the gas-phase polymerization of propylene, a higher activity and better morphological properties and mechanical resistance during polymerization (evidenced by the higher bulk density and lower percentage of fines) with respect to the catalyst component prepared in the absence of step (A). Moreover, when used in the preparation heterophasic copolymers, the said catalysts give polymers which, in respect of the same amount of amorphous phase, are characterized by a better flowability which in turn reflects on a better plant operability. In addition to gas-phase the catalysts of the invention can be used in any other olefin polymerization processes known in the art. They can be used for example in slurry polymerization using as diluent an inert hydrocarbon solvent or bulk polymerization using the liquid monomer (for example propylene) as a reaction medium. When used in gas-phase the set-up can comprise one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.1 and 10 MPa, preferably between 1 and 5 MPa. In the bulk polymerization the operating pressure is generally between 1 and 6 MPa preferably between 1.5 and 4 MPa.

The catalysts of the invention are very useful for preparing a broad range of polyolefin products. Specific examples of the olefinic polymers which can be prepared are: high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra low density (VLDPE and ULDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%;

They are particularly suited for the preparation of isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and or other alpha-olefins.

The following examples are given to illustrate and not to limit the invention itself.

### CHARACTERIZATION

### Determination of X.I.

2.50 g of polymer were dissolved in 250 ml of o-xylene under stirring at 135 °C for 30 minutes, then the solution was cooled to 25 °C and after 30 minutes the insoluble polymer was filtered off. The resulting solution was evaporated in nitrogen flow and the residue was dried and weighed to determine the percentage of soluble polymer and then, by difference, the xylene insoluble fraction (%).

**Melt Index:** measured at 190°C according to ASTM D-1238 condition "L"

**Flowability:** It indicates_the time expressed in seconds required by a standard amount of material (100g) to flow through a funnel with orifice of ½".

### EXAMPLES

### Polymerization procedure for the preparation of propylene homopolymers (A)

Into a gas phase polymerization reactor a polypropylene (component (A)) is produced by feeding separately in a continuous and constant flow the catalyst component in a propylene flow, the aluminum triethyl (TEAL), dicyclopentyldimethoxysilane (DCPMS) as external donor, hydrogen (used as molecular weight regulator) and propylene in the gas state in the amounts reported in table 1. The polymerization temperature is 75°C and the total pressure 24 barg.

The polymer particles exiting the reactor are subjected to a steam treatment to remove the reactive monomers and volatile substances, and then dried.

### Polymerization procedure for the preparation of propylene heterophasic copolymers (B)

Into a first gas phase polymerization reactor a propylene homopolymer (component (A)) is produced by feeding separately in a continuous and constant flow the catalyst component in a propylene flow, the aluminum triethyl (TEAL), dicyclopentyldimethoxysilane (DCPMS) as external donor, hydrogen (used as molecular weight regulator) and propylene in the gas state to reach the conditions reported in table 2.

The polypropylene homopolymer produced in the first reactor is discharged in a continuous flow and, after having been purged of unreacted monomers, is introduced, in a continuous flow, into a second gas phase polymerization reactor, together with quantitatively constant flow of hydrogen, ethylene and propylene in the gas state to produce a propylene/ethylene copolymer (component (B). Polymerization conditions, molar ratio of the reactants and composition of the copolymers obtained are shown in Table 2.

The polymer particles exiting the final reactor are subjected to a steam treatment to remove the reactive monomers and volatile substances, and then dried.

### General procedure for preparation of the spherical adduct

An initial amount of microspheroidal MgCl_{2·}8C₂H₅OH was prepared according to the method described in ex.2 of WO98/44009 but operating on larger scale and setting the stirring conditions so as to obtain an adduct having an average particle size of 25 µm.

### Example 1.

### Step (A)

Into a 600 L steel reactor, equipped with a mechanical stirrer, 300 L of TiCl₄ were introduced and cooled to 0°C. While stirring, 20 kg of spherical adduct, prepared as described in the previous paragraph, and an amount of di-isobutyl-phthalate corresponding to 0,065 moles per mole of Mg were added. The temperature was raised to 50°C and was maintained for additional 15 minutes. Afterward the stirring was discontinued, the solid product was allowed to settle and the supernatant liquid was siphoned off.

### Step (B)

220 L of TiCl₄ were added to the solid prepared in step (A). The suspension was heated and, at 50°C, an amount of di-isobutyl-phthalate corresponding to 0,065 moles per mole of Mg, were added. The temperature was raised to 100°C and maintained for 60 min. Then, the stirring was discontinued, the solid product was allowed to settle at 100°C and the supernatant liquid was siphoned off.

### Step (C)

Then 220 L of fresh TiCl₄ were added on the solid product prepared in step (B). The mixture was reacted at 120°C for 60 min and then the stirring was stopped and the reactor cooled to 105°C; the solid product was allowed to settle at 105°C and the supernatant liquid was siphoned off. Once again, 220 L of fresh TiCl₄ were added on the solid product. The mixture was reacted at 120°C for 30 min and than the stirring was stopped and the reactor cooled to 105°C; the solid product was allowed to settle at 105°C and the supernatant liquid was siphoned off. The solid was washed with hexane three times at 80°C, three more times at room temperature and finally was dried under vacuum at 40°C. The analysis showed that the catalyst contained 2.5% of Ti, 17.6% of Mg and 16.4% of diisobutylphthalate. The result of the polymerization (procedure A) are reported in table 1.

### Comparison Example 1

The procedure of Example 1 was repeated by omitting the stage (A) of reaction and feeding in step (B) the whole amount of diisobutylphathalate at 0°C. The analysis showed that the catalyst contained 2.3% of Ti, 18.6% of Mg and 11.9% of diisobutylphthalate and the result of the polymerization (procedure A) are reported in table 1.

### Example 2

The solid catalyst component obtained according to the procedure described in example 1 was used to prepare an heterophasic copolymer following the polymerization procedure (B). The conditions and the result of the polymerization (procedure B) are reported in table 2.

### Comparison Example 2

The solid catalyst component obtained according to the procedure described in comparison example 1 was used to prepare an heterophasic copolymer following the polymerization procedure (B). The conditions and the results of the polymerization (procedure B) are reported in table. 2.

**Table 1**

| Example No. | | 1 | Comp.1 |
|---|---|---|---|
| TEAL/DCPMS | Wt ratio | 7.8 | 8.1 |
| TEAL/catalyst | Wt ratio | 10.3 | 9.2 |
| H₂/C₃⁻ | mol. | 0.115 | 0.113 |
| Mileage | Kg/g | 18.2 | 16.2 |
| Xylene insolubles | Wt%/ | 98.5 | 98.1 |
| Bulk Density | g/cm³ | 0.43 | 0.40 |
| Fines | wt% | 1.2 | 2.8 |
| MFR | g/10' | 31.4 | 36.2 |

**Table 2**

| Example No. | | 2 | Comp.2 |
|---|---|---|---|
| 1^{st} Reactor | | | |
| Temperature | °C | 75 | 75 |
| Pressure | barg | 24 | 24 |
| H₂/C₃- | mol. | 0.1 | 0.1 |
| Split | wt% | 79.8 | 82.7 |
| 2^{nd} Reactor | | | |
| Temperature | °C | 70 | 65 |
| Pressure | barg | 14 | 18 |
| C₂-/(C₂⁻ + C₃⁻) | mol. | 0.322 | 0.331 |
| split | | 20.2 | 17.3 |
| Polymer analysis | | | |
| MIL | g/10' | 18.4 | 21 |
| Xyl. Sol. | %wt | 18.7 | 15.1 |
| C₂ total | %wt | 8.8 | 9.4 |
| C₂ in copolymer | %wt | 43.6 | 54.3 |
| Flowability | Sec | 8 | 11 |
| Bulk density | g/cm³ | 0.39 | 0.37 |

| | | | |
|---|---|---|---|
| Notes: C₃⁻ = propylene; C₂- = ethylene; split = amount of polymer produced in the concerned reactor; C₂⁻ content (copolymer) = ethylene content with respect to the copolymer prepared in the concerned reactor. | | | |

## Claims

1. A catalyst component for the polymerization of olefins comprising Mg, Ti, halogen and an electron donor obtainable by a batch process comprising:
(A) A first step comprising reacting an adduct of formula MgCl₂(ROH)ₙ, where R is a C1-C10 alkyl group, and n is from 0.5 to 6, in a liquid medium comprising a titanium compound having at least a Ti-Cl bond at a temperature ranging from 0°C to 80°C and then removing the liquid medium;
(B) A subsequent step comprising reacting the solid product obtained in (A) in a liquid medium comprising an electron donor ED selected from ethers, esters, ketones, silanes, amines, nitriles and amides, and a titanium compound having at least a Ti-Cl bond at a temperature higher than 80°C and then, after removing the liquid medium;
(C) A subsequent step comprising reacting the solid product coming from (B) with a liquid medium comprising a titanium compound having at least a Ti-Cl bond at a temperature higher than 80°C.

2. The catalyst component according to claim 1 in which the titanium compound used in steps A), (B) and (C) of the present invention is chosen among those of formula Ti(OR)ₙCl₄₋ₙ in which n is comprised between 0 and 3; and R is an alkyl radical having 1-10 carbon atoms or a COR group.

3. Catalyst components according to claim 2 in which the titanium compound is TiCl₄.

4. Catalyst component according to claim 1 in which the reaction temperature in step (A) ranges from 10 to 70°C.

5. Catalyst component according to claim 1 in which reaction temperature in step (A) is carried out by keeping the concentration of the adduct in the medium below 100 g/l.

6. Catalyst component according to claim 1 in which the step (B) is carried out in the presence of an electron donor (ED), selected from esters.

7. Catalyst component according to claim 6 in which the ED is selected from the alkyl and aryl esters of mono or poly aromatic or aliphatic carboxylic acids.

8. Catalyst for the polymerization of olefins obtained by reacting a catalyst component according to one of the claims 1-7 with organo-Al compounds.

9. Process for the polymerization of olefms carried out in the presence of the catalyst according to claim 8.

## Patentansprüche

1. Katalysatorkomponente zur Polymerisation von Olefinen, umfassend Mg, Ti, Halogen und einen Elektronendonator, die durch ein Chargenverfahren erhältlich ist, das Folgendes umfasst:
(A) Einen ersten Schritt, umfassend das zur Reaktion bringen eines Addukts der Formel MgCl₂(ROH)ₙ, worin R eine C₁- bis C₁₀-Alkylgruppe ist, und n von 0,5 bis 6 ist, in einem flüssigen Medium, das eine Titanverbindung mit mindestens einer Ti-Cl-Bindung bei einer Temperatur im Bereich von 0 °C bis 80 °C umfasst und dann Entfernen des flüssigen Mediums;
(B) einen sich anschließenden Schritt, umfassend das zur Reaktion bringen des festen Produkts, das in (A) in einem flüssigen Medium erhalten wird, das einen aus Ethern, Estern, Ketonen, Silanen, Aminen, Nitrilen und Amiden ausgewählten Elektronendonator ED und eine Titanverbindung mit mindestens einer Ti-Cl-Bindung bei einer Temperatur höher als 80 °C umfasst und dann, nach Entfernen des flüssigen Mediums;
(C) einen sich anschließenden Schritt, umfassend das zur Reaktion bringen des von (B) kommenden festen Produkts mit einem flüssigen Medium, das eine Titanverbindung mit mindestens einer Ti-Cl-Bindung bei einer Temperatur höher als 80 °C umfasst.

2. Katalysatorkomponente nach Anspruch 1, worin die in den Schritten (A), (B) und (C) der vorliegenden Erfindung verwendete Titanverbindung unter denen der Formel Ti(OR)ₙCl₄₋ₙ ausgewählt ist, worin n zwischen 0 und 3 liegt; und R ein Alkylrest mit 1 bis 10 Kohlenstoffatom(en) oder einer COR-Gruppe ist.

3. Katalysatorkomponenten nach Anspruch 2, worin die Titanverbindung TiCl₄ ist.

4. Katalysatorkomponente nach Anspruch 1, worin die Reaktion in Schritt (A) im Bereich von 10 bis 70 °C liegt.

5. Katalysatorkomponente nach Anspruch 1, worin die Reaktion in Schritt (A) derart durchgeführt wird, dass die Konzentration des Addukts im Medium unter 100 g/l gehalten wird.

6. Katalysatorkomponente nach Anspruch 1, worin Schritt (B) in Anwesenheit eines aus Estern ausgewählten Elektronendonators (ED) durchgeführt wird.

7. Katalysatorkomponente nach Anspruch 6, worin der ED aus den Alkyl- und Arylestern von mono- oder polyaromatischen oder aliphatischen Carbonsäuren ausgewählt ist.

8. Katalysator zur Polymerisation von Olefinen, der durch zur Reaktion bringen einer Katalysatorkomponente nach einem der Ansprüche 1 bis 7 mit Organo-Al-Verbindungen erhalten wird.

9. Verfahren zur Polymerisation von Olefinen, das in Anwesenheit des Katalysators nach Anspruch 8 durchgeführt wird.

## Revendications

1. Composant catalyseur pour la polymérisation d'oléfines comprenant Mg, Ti, halogène et un donneur d'électrons pouvant être obtenu par un procédé par lots comprenant :
(A) Une première étape comprenant la réaction d'un produit d'addition de formule MgCl₂(ROH)ₙ, où R représente un groupe alkyle en C1-C10, et n vaut de 0,5 à 6, dans un milieu liquide comprenant un composé du titane présentant au moins une liaison Ti-Cl à une température s'étendant de 0°C à 80°C et ensuite l'élimination du milieu liquide ;
(B) Une étape suivante comprenant la réaction du produit solide obtenu en (A) dans un milieu liquide comprenant un donneur d'électrons DE choisi parmi les éthers, les esters, les cétones, les silanes, les amines, les nitriles et les amides, et d'un composé du titane présentant au moins une liaison Ti-Cl à une température supérieure à 80°C et ensuite, après élimination du milieu liquide ;
(C) Une étape suivante comprenant la réaction du produit solide venant de (B) avec un milieu liquide comprenant un composé du titane présentant au moins une liaison Ti-Cl à une température supérieure à 80°C.

2. Composant catalyseur selon la revendication 1, dans lequel le composé de titane utilisé dans les étapes (A), (B) et (C) de la présente invention est choisi parmi ceux de formule Ti(OR)ₙCl₄₋ₙ dans laquelle n est compris entre 0 et 3 ; et R est un radical alkyle présentant 1-10 atomes de carbone ou un groupe COR.

3. Composants catalyseurs selon la revendication 2, dans lesquels le composé de titane est le TiCl₄.

4. Composant catalyseur selon la revendication 1, dans lequel la température de réaction dans l'étape (A) s'étend de 10 à 70°C.

5. Composant catalyseur selon la revendication 1 dans lequel la réaction dans l'étape (A) est obtenue en maintenant la concentration du produit d'addition dans le milieu sous 100 g/l.

6. Composant catalyseur selon la revendication 1, dans lequel l'étape (B) est réalisée en présence d'un donneur d'électrons (DE), choisi parmi les esters.

7. Composant catalyseur selon la revendication 6, dans lequel le DE est choisi parmi les esters alkyliques et aryliques d'acides carboxyliques monoaromatiques ou polyaromatiques ou aliphatiques.

8. Catalyseur pour la polymérisation d'oléfines obtenu en faisant réagir un composant catalyseur selon l'une quelconque des revendications 1-7 avec des composés organiques d'Al.

9. Procédé pour la polymérisation d'oléfines réalisé en présence du catalyseur selon la revendication 8.
